# DEMANDE DE BREVET EUROPEEN

(11) **EP 1 835 372 A1**
(43) Date de publication de la demande: **19.09.2007**
(21) Numéro de dépôt: 07290327.1
(22) Date de dépôt: 16.03.2007
(51) Int. Cl.: G05D 23/275, H01H 37/54

(54) **Dispositif de régulation thermostatique de chauffe-eau électrique**

(30) Priorité: 17.03.2006 FR 0602393
(71) Demandeur: S.A.T.E., 90150 Fontaine (FR)
(72) Inventeur: Martel, Jérome, 68300 Saint Louis (FR)
(74) Mandataire: Kaspar, Jean-Georges

(57) **Abrégé**

Un dispositif de régulation thermostatique de chauffe-eau électrique comporte des moyens électromécaniques de régulation thermostatique destinés à être insérés dans un doigt de gant (DG) d'un chauffe-eau auquel le dispositif est destiné.

Lesdits moyens électromécaniques (3, 4) comportent un thermostat à bilame pourvu d'une plage élargie de coupure.

Application à la fabrication et à la régulation de chauffe-eau électrique à accumulation.

## Description

L'invention est relative à un dispositif de régulation thermostatique de chauffe-eau électrique.

De manière courante, la régulation thermostatique et de déclenchement en sécurité de l'alimentation de la résistance de chauffage d'un chauffe-eau électrique est assurée par un thermostat électromécanique.

Un thermostat électromécanique de type connu peut comporter une chambre de température, peut être du type à lame bimétallique, à disque ou à bulbe, ou encore à dilatation de liquide agissant mécaniquement sur un contact électrique de puissance.

Le document FR 2 774 153 décrit un dispositif de gestion électronique pour chauffe-eau électrique à accumulation, comportant en combinaison des moyens électroniques de régulation thermostatique et de déclenchement de sécurité monté sur une carte électronique secondaire insérée dans un doigt de gant, des moyens de protection cathodique de la cuve du chauffe-eau par anode à courant imposé, et des moyens formant contacteur d'alimentation de la résistance de chauffage du chauffe-eau électrique.

Un premier but de l'invention est de perfectionner l'état de la technique connue, en assurant une régulation thermostatique d'un chauffe-eau électrique par des moyens non électroniques, tout en évitant l'usage des moyens électromécaniques de l'art antérieur.

On connaît, dans le domaine de la protection des moteurs électriques, des appareils de protection thermique comportant un thermostat à bilame qui ouvre un circuit électrique en cas d'échauffement et qui ferme ce circuit dès disparition de cet échauffement. Ces thermostats à bilame fonctionnent pratiquement entre deux températures voisines, en raison de l'inertie thermique du bilame : ce fonctionnement entre deux températures voisines entraîne un phénomène de battement thermique qui ne présente pas d'inconvénient pour la protection thermique des moteurs électriques.

Cependant, ce phénomène de battement thermique ne permet pas d'assurer une fonction efficace de régulation de la température d'un chauffe-eau électrique.

Le document WO 91/19311 décrit des perfectionnements relatifs au contrôle de température présentant un phénomène de battement thermique ou de progression par paliers.

Un deuxième but de l'invention est de permettre l'utilisation d'un thermostat à bilame, en évitant les phénomènes d'hystérésis ou de battement thermique, de manière à effectuer une régulation thermostatique de chauffe-eau électrique au moyen d'un thermostat à bilame.

L'invention a pour objet un dispositif de régulation thermostatique de chauffe-eau électrique, comportant des moyens électromécaniques de régulation thermostatique présentant une conformation adaptée à l'insertion dans un doigt de gant d'un chauffe-eau auquel le dispositif est destiné, caractérisé par le fait que lesdits moyens électromécaniques comportent un thermostat à bilame pourvu d'une plage élargie de coupure, de manière à éviter les phénomènes d'hystérésis ou de battement thermique.

Selon d'autres caractéristiques de l'invention :
- lesdits moyens électromécaniques comportent un fusible formant coupe-circuit thermique et monté en série avec ledit thermostat à bilame.
- la plage élargie de coupure est comprise entre 20K et 60K.
- la plage élargie de coupure peut être comprise entre 30K et 50K.
- la plage élargie de coupure est voisine de 30K pour une intensité inférieure à 7A.
- la plage élargie de coupure est voisine de 50K pour une intensité supérieure à 9A.
- le dispositif peut comporter un moyen de centrage du thermostat à bilame.
- le thermostat à bilame peut être entouré d'une gaine thermorétractable.
- le fusible formant coupe-circuit thermique peut être entouré d'une gaine thermorétractable.

L'invention a également pour objet un chauffe-eau électrique comportant un dispositif de régulation thermostatique suivant l'invention.

L'invention sera mieux comprise grâce à la description qui va suivre, donnée à titre d'exemple non limitatif en référence aux dessins annexés, dans lesquels :
- La figure 1 représente schématiquement une vue en coupe d'un dispositif selon l'invention monté sur une bride de fermeture de chauffe-eau électrique.
- La figure 2 représente schématiquement un graphique représentatif d'un essai d'adaptation de thermostat à bilame de l'art antérieur sur un chauffe-eau électrique.
- La figure 3 représente schématiquement une vue partielle en coupe d'un dispositif selon l'invention.
- La figure 4 représente schématiquement un graphique illustrant le fonctionnement d'un dispositif selon l'invention.

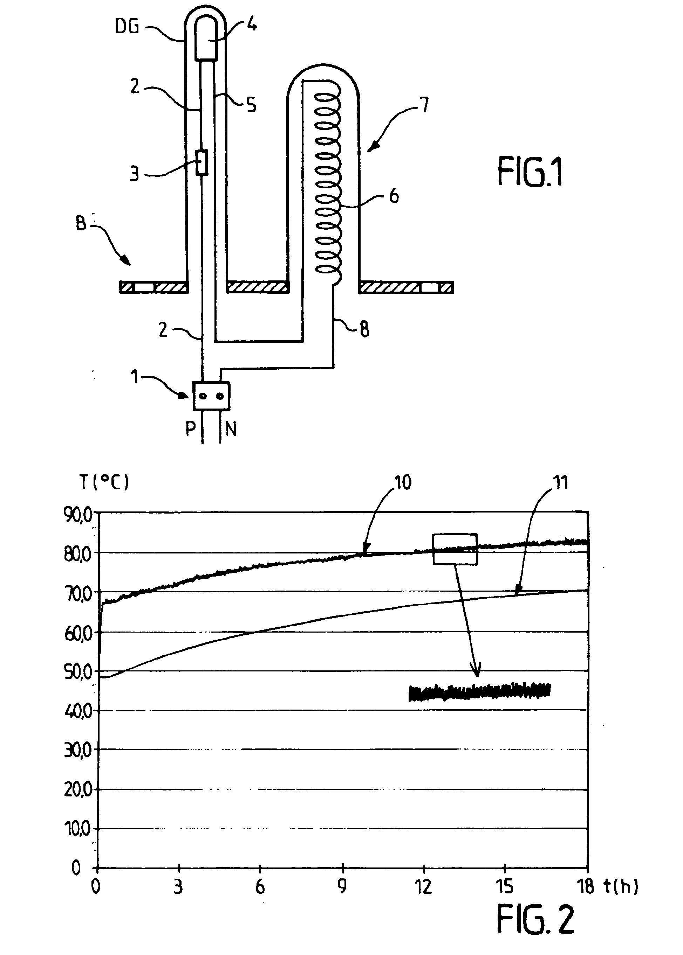

En référence aux figures 1, 3 et 4, les éléments identiques ou fonctionnellement équivalents sont repérés par des chiffres de référence identiques.

Sur la figure 1, un dispositif selon l'invention est alimenté par une alimentation électrique comportant au moins un fil (P) de phase et un fil (N) de neutre.

Le fil (P) de phase, relié par l'intermédiaire d'un bomier (1) à un conducteur rigide (2) présentant par exemple une section conductrice de 1,5 mm².

Le fil rigide (2) est relié à un fusible (3) monté en série avec un thermostat à bilame (4).

La deuxième sortie du thermostat (4) à bilame est reliée à un fil rigide (5) d'alimentation d'une résistance électrique (6) insérée dans un corps de chauffe (7).

La résistance électrique (6) est reliée par un conducteur rigide (8) au bomier (1), pour être reliée au fil (N) de neutre.

De manière connue, une bride (B) de fermeture de chauffe-eau électrique porte le corps de chauffe (7) et un doigt de gant (DG) contenant le fusible (3) et le thermostat (4) à bilame.

Le doigt de gant (DG) est utilisé dans l'art antérieur pour protéger des moyens électromécaniques de régulation thermostatique, ou une carte électronique secondaire portant une sonde de température, un amplificateur de régulation de sécurité et un capteur de température pour le déclenchement de sécurité, comme décrit dans le document FR 2 774 153 A1.

Sur la figure 2, des essais de fonctionnement ont été effectués avec un thermostat à bilame utilisé habituellement pour la protection thermique d'un moteur électrique.

Les essais effectués pendant une durée d'environ dix-huit heures ont permis de mesurer la variation de température du thermostat à bilame et la variation de température de l'eau chaude contenue dans la cuve d'un chauffe-eau électrique équipé conformément à la figure 1.

Sur le graphique portant le temps (t) en abscisse et la température (T) en ordonnée, la courbe supérieure (10) représente la température du thermostat à bilame, tandis que la courbe inférieure (11) représente la température de l'eau chaude.

La courbe (10) et la courbe (11) présentent tout d'abord une montée en température très rapide : la température du thermostat à bilame atteint très rapidement une valeur d'environ 68°C, tandis que l'eau chaude de la cuve monte très rapidement à une température d'environ 48°C.

Cette montée extrêmement rapide révèle que le thermostat à bilame subit l'échauffement du courant qui le traverse, sans aucune étape intermédiaire.

A partir de 68°C, la température du thermostat à bilame effectue des battements entre deux courbes croissantes voisines, sans aucun arrêt ni aucune limite apparente, de sorte que la température du chauffe-eau ne peut pas être régulée efficacement.

La courbe (11) de température d'eau chaude est également constamment croissante, ce qui confirme l'absence de régulation efficace.

Les essais de fonctionnement réalisés en référence à la figure 2 indiquent par conséquent qu'un thermostat à bilame utilisé habituellement pour la protection thermique d'un moteur électrique n'est pas adapté à la régulation thermostatique d'un chauffe-eau.

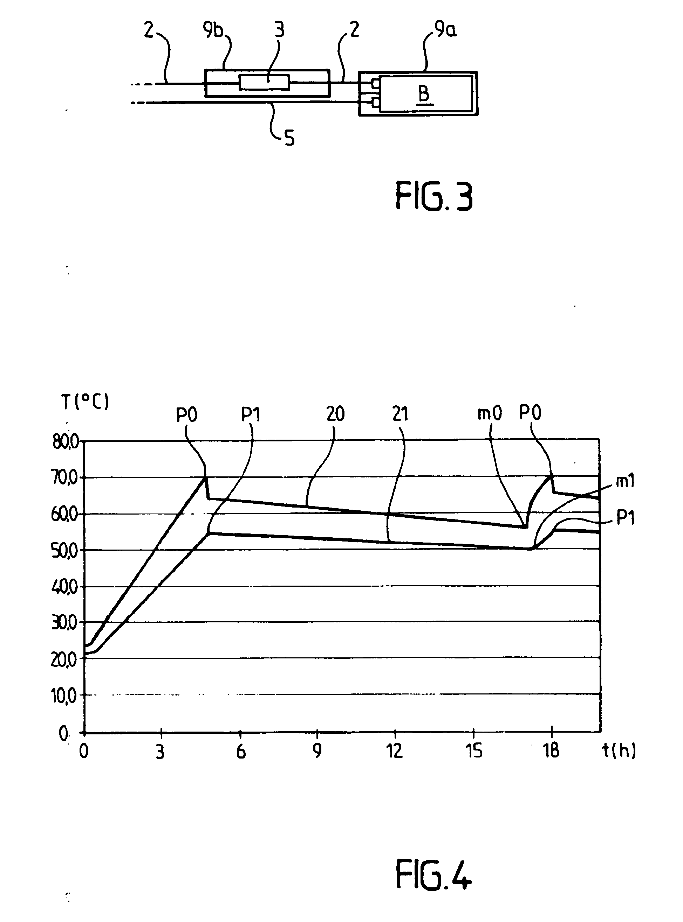

Sur la figure 3, une vue partielle d'un dispositif selon l'invention représente en coupe un circuit comportant un thermostat à bilame (B) pourvu d'une plage élargie de coupure.

Le circuit représenté comporte un thermostat à bilame (B) proprement dit conçu de manière à avoir un hystérésis agrandi correspondant à une plage élargie de coupure comprise entre 30K pour une intensité inférieure à 7A, et 50K pour une intensité supérieure à 9A.

Ce thermostat à bilame (B) est un thermostat de régulation fabriqué avec une technologie analogue à la technologie utilisée habituellement pour fabriquer les thermostats à bilame destinée à la protection thermique des moteurs électriques.

Ce thermostat à bilame (B) comporte ainsi une lame métallique courbe, dont la géométrie se modifie sous l'effet de la variation de température résultant de l'échauffement ambiant et de l'échauffement par effet Joule produit par le courant électrique qui le traverse.

Ce thermostat à bilame (B) est associé avec le fusible (3) formant coupe-circuit thermique pour obtenir un système de régulation complet assurant les fonctions de régulation et de coupure de sécurité.

A cet effet le fil rigide (2) est relié au fusible (3) monté en série avec le thermostat à bilame (B) en étant disposé de manière à ne pas vieillir prématurément. La deuxième sortie du thermostat à bilame (B) est destinée à être reliée à un fil rigide (5) d'alimentation d'une résistance électrique non représentée.

Pour maintenir le thermostat (B) à bilame en position, on peut prévoir un moyen de centrage mécanique du thermostat (B) à bilame.

Ce thermostat (B) à bilame pourvu d'une plage élargie de coupure est soudé aux fils rigides 2 et 5.

Puis on effectue la mise en place d'une gaine thermorétractable 9a autour du thermostat (B) à bilame en assurant éventuellement le pincement de cette gaine thermorétractable 9a à l'extrémité du thermostat (B) à bilame et en assurant éventuellement le pincement de cette gaine thermorétractable 9a sur une patte du thermostat (B) à bilame.

On effectue ensuite la mise en place du fusible thermique 3 par sertissage aux fils rigides 2 et 5.

Puis on effectue la mise en place d'une gaine thermorétractable 9b autour du fusible thermique 3 en assurant un rétreint de cette gaine thermorétractable 9b uniquement aux extrémités du fusible thermique 3.

Sur la figure 4, un essai de fonctionnement du dispositif selon l'invention est représenté sur un graphique portant en abscisse le temps (t) et en ordonnée la température (T) en degrés centigrades.

La courbe supérieure (20) représente la variation de température de l'ensemble thermostat représenté à la figure 3, tandis que la courbe (21) représente la température d'eau chaude du chauffe-eau électrique.

La montée en température est sans hystérésis ou battement thermique et régulière dans le temps : le thermostat à bilame atteint une température maximale d'environ 70°C en 4 heures, de manière linéaire et régulière, tandis que la température d'eau chaude croît régulièrement pendant le même temps jusqu'à une température d'environ 55°C.

Au pic (P0) de température de 70°C, le thermostat à bilame coupe l'alimentation électrique du corps de chauffe, ce qui provoque un refroidissement du thermostat en deux phases : une première phase instantanée due à l'arrêt du courant électrique et à l'arrêt de l'échauffement par effet Joule et une deuxième phase de décroissance plus régulière résultant du refroidissement ambiant, jusqu'à une température d'environ 56°C.

Au pic de température (P0) de la température du thermostat (B) à bilame pourvu d'un moyen de transfert thermique, correspond un pic P1 de température d'eau chaude, à partir duquel la température d'eau chaude décroît régulièrement jusqu'à environ 50°C.

Lorsque la température du thermostat à bilame a diminué jusqu'à un minimum (m0) d'environ 56°C, le thermostat (B) à bilame ferme à nouveau le circuit électrique et alimente le circuit représenté à la figure 1.

Cette alimentation électrique provoque tout d'abord une montée rapide du thermostat (B) à bilame, puis une augmentation plus régulière de sa température jusqu'à un deuxième pic (P0) voisin de 70°C.

Lors de la fermeture du circuit électrique et de la réalimentation, la température d'eau chaude qui avait décru jusqu'à un minimum (m1) d'environ 50°C, remonte régulièrement jusqu'à un pic (P1) correspondant à un nouvel arrêt du chauffage.

Des essais de longue durée ont permis de vérifier que les pics (P0 et P1), ainsi que les minima (m0 et m1) restent sensiblement constants, de sorte que la régulation thermostatique obtenue grâce au dispositif selon l'invention est efficace et reproductible.

Le dispositif selon l'invention permet d'éviter l'emploi d'une carte secondaire électronique telle que décrite dans le document FR 2 774 153 A1 et évite l'emploi des moyens électromécaniques de régulation thermostatique de l'art antérieur.

L'invention permet ainsi d'obtenir une régulation thermostatique efficace au moyen d'un dispositif comportant des éléments de fabrication simple et économique, d'assemblage aisé et rapide.

Le remplacement du dispositif selon l'invention est facilité par les faibles dimensions du montage destiné à être inséré dans un doigt de gant (DG), et peut être effectué sans outillage particulier.

L'invention décrite en référence à un mode de réalisation particulier n'y est nullement limitée, mais couvre au contraire toute modification de forme et toute variante de réalisation dans le cadre et l'esprit de l'invention.

## Revendications

1. Dispositif de régulation thermostatique de chauffe-eau électrique, comportant des moyens électromécaniques de régulation thermostatique présentant une conformation adaptée à l'insertion dans un doigt de gant (DG) d'un chauffe-eau auquel le dispositif est destiné, **caractérisé par le fait que** lesdits moyens électromécaniques (3, 4) comportent un thermostat à bilame pourvu d'une plage élargie de coupure, de manière à éviter les phénomènes d'hystérésis ou de battement thermique..

2. Dispositif selon la revendication 1, **caractérisé par le fait que** lesdits moyens électromécaniques (3, 4) comportent un fusible (3) formant coupe-circuit thermique et monté en série avec ledit thermostat à bilame.

3. Dispositif selon la revendication 1 ou la revendication 2, **caractérisé par le fait que** la plage élargie de coupure est comprise entre 20K et 60K.

4. Dispositif selon la revendication 1 ou la revendication 2, **caractérisé par le fait que** la plage élargie de coupure est comprise entre 30K et 50K.

5. Dispositif selon la revendication 1 ou la revendication 2, **caractérisé par le fait que** la plage élargie de coupure est voisine de 30K pour une intensité inférieure à 7A.

6. Dispositif selon la revendication 1 ou la revendication 2, **caractérisé par le fait que** la plage élargie de coupure est voisine de 50K pour une intensité supérieure à 9A.

7. Dispositif selon la revendication 1 ou la revendication 2, **caractérisé par le fait que** le dispositif comporte un moyen de centrage du thermostat à bilame.

8. Dispositif selon la revendication 7, **caractérisé par le fait que** le thermostat à bilame est entouré d'une gaine thermorétractable.

9. Dispositif selon la revendication 2, **caractérisé par le fait que** le fusible (3) formant coupe-circuit thermique est entouré d'une gaine thermorétractable.

10. Chauffe-eau électrique comportant un dispositif selon l'une quelconque des revendications 1 à 9.
